(19) Europäisches Patentamt
European Patent Office
Office européen des brevets

(11) **EP 1 936 329 A2**

(12) **EUROPÄISCHE PATENTANMELDUNG**

(43) Veröffentlichungstag:
**25.06.2008 Patentblatt 2008/26**

(51) Int Cl.:
***G01C 21/36*** *(2006.01)* ***G06F 17/30*** *(2006.01)*

(21) Anmeldenummer: **07122172.5**

(22) Anmeldetag: **03.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **22.12.2006 DE 102006061229**

(71) Anmelder: **ROBERT BOSCH GMBH**
**70442 Stuttgart (DE)**

(72) Erfinder:
- **Schloegl, Dietmar**
 **31079, Sibbesse (DE)**
- **Kersken, Ulrich**
 **31199, Diekholzen (DE)**
- **Wettstein, Horst**
 **76227, Karlsruhe (DE)**

(54) **Verfahren zur Gliederung von blattorientierten Selektorbäumen mit räumlich ausgewogener Segmentierung und Einrichtung zur Durchführung des Verfahrens**

(57) Die vorliegende Erfindung schafft ein Verfahren und eine diesbezügliche Vorrichtung zum Erzeugen von Selektorbäumen (100, ASF). Hierbei erfolgt ein Bereitstellen einer Eingabemaskeneinheit (101), ein Eingeben von Selektionsparametern (201) in die Eingabemaskeneinheit (101), ein Bilden von Selektorbaumeinheiten (202) in Abhängigkeit von den in die Eingabemaskeneinheit (101) eingegebenen Selektionsparametern (201), ein Segmentieren der Selektorbaumeinheiten (202) in Segmenteinheiten (203, 204a-204n) und ein Übertragen der Segmenteinheiten (203, 204a-204n) segmentweise in eine Speichereinheit (304). Die Segmente des Selektorbaums werden über der Breite des Selektorbaums bereitgestellt, so dass eine Aufteilung der Segmenteinheiten (203, 204a-204n) derart variabel gestaltbar ist, dass Größenunterschiede der einzelnen Segmenteinheiten beschränkt sind.

FIG. 2

EP 1 936 329 A2

**Beschreibung**

Die vorliegende Erfindung betrifft mobile Kommunikationssysteme, und betrifft insbesondere ein Verfahren zur Gliederung von bei mobilen Kommunikationssystemen eingesetzten ASF-Bäumen, d.h. multiären blattorientierten Selektorbäumen mit Alphabetzeichen als Selektoren zur räumlich ausgewogenen Segmentierung. Derartige Selektorbäume bzw. ASF-Bäume werden bei mobilen Navigationssystemen weit verbreitet eingesetzt, um einerseits eine manuelle zeichenweise Eingabe von Zielbezeichnungen durch Vorgabe der stellenweise möglichen Zeichen unterstützend zu steuern, und um andererseits die eingegebenen Namen zu identifizieren. Derartige Selektorbäume verwirklichen durch die Zeichen entlang ihrer Pfade die identischen Präfixe der jeweils nachfolgenden Namensmenge zumindest so lange, bis eine Eindeutigkeit erzielt ist. Im einfachsten Fall von nicht-segmentierten Selektorbäumen ist bei der Eingabe eines Zielparameters ein vollständiger Selektorbaum im Arbeitsspeicher vorhanden. Ferner betrifft die vorliegende Erfindung eine Analysiereinrichtung zur Analyse derartiger Selektorbäume.

Herkömmliche Verfahren zur Eingabe von Zielparametern bei der mobilen Navigation weisen den Nachteil auf, dass dann, wenn mehrere unterschiedliche Zielparameter gleichzeitig bzw. intermittierend eingegeben werden müssen, dementsprechend mehrere unterschiedliche Selektorbäume (ASF-Bäume) bereitgestellt werden müssen. In unzweckmäßiger Weise sind derartige Selektorbäume bei einer großen Anzahl von Ortsnamen und/oder Straßennamen eines dichter besiedelten Landes äußerst umfangreich. In Deutschland kann beispielsweise mit einer Anzahl von 500.000 unterschiedlichen Straßennamen gerechnet werden.

Wird berücksichtigt, dass ein zugehöriger Selektorbaum üblicherweise eine dreibis vierfache Anzahl von Baumelementen zur Bereitstellung einer Eindeutigkeit enthalten muss, dann ergibt sich eine Datenstruktur von bis zu zwei Millionen Datenelementen. Je nach funktionaler Leistungsfähigkeit eines Selektorbaums kann es in unzweckmäßiger Weise erforderlich sein, dass ein Datenelement vier bis zehn Speicherstellen bzw. Bytes benötigt. Auf diese Weise entsteht für einen derartigen Selektorbaum ein Speicherbedarf (Speichertiefe) von 10 bis 20 MByte, um eine einzige Namensmenge (beispielsweise eine einzige Straßennamensmenge) zu unterstützen. Werden unterschiedliche Bäume bereitgestellt, kann dies zu Datenmengen führen, die eine Speicherkapazität eines Navigationsrechners in einem Navigationssystem bei weitem übertreffen.

Dadurch entsteht der Nachteil, dass äußerst umfangreiche Datenbestände mit dem Navigationssystem nicht verarbeitet werden können.

Zur Lösung dieses Problems ist vorgeschlagen worden, eine Segmentierung derartiger Datenstrukturen vorzusehen, wobei schließlich auch eine Segmentierung der Selektorbäume bereitgestellt wird. Diese Vorgehensweise kann dann zweckmäßig sein, wenn zur Identifikation eines Namens nicht ein Selektorbaum als Ganzes, sondern nur ein Ausschnitt des Selektorbaums, insbesondere die Umgebung eines Pfads von der Baumwurzel (als Einstieg) zu einem Blatt (als Namensrepräsentant) benötigt wird.

Hierbei ist es erforderlich, einen Selektorbaum in sukzessiv benötigte Segmenteinheiten zu unterteilen. Da sich derartige Segmenteinheiten in der Regel überlagern können, ist es aufgrund einer effizienten Speichernutzung vorteilhaft, derartige Segmenteinheiten möglichst gleich groß auszuführen.

In nachteiliger Weise ergeben sich jedoch bei der Namensbezeichnung aufgrund orthografischer und/oder auch kultureller Besonderheiten einer spezifischen Sprache Situationen, in welchen gemeinsame Präfixe unterschiedlich lang sind. Aus ähnlichen, landesspezifischen Anordnungen bei der Bildung von Orts- und Straßennamen sind derartige Selektorbäume über die gesamte Alphabetmenge hinweg unterschiedlich dicht. Derartige Selektorbäume sind daher über ihre Breite und Höhe hinweg extrem heterogen. In nachteiliger Weise führen diese Eigenschaften zu einer Erschwernis bei einer ausgewogenen Gliederung im Hinblick auf eine segmentierte Speicherung und Nutzung derartiger Selektorbäume.

VORTEILE DER ERFINDUNG

Die der Erfindung zu Grunde liegende Problematik besteht somit darin, ein Verfahren zum Bereitstellen von Segmenten eines Selektorbaums über der Breite des Selektorbaums vorzusehen, bei dem eine Aufteilung der Segmenteinheiten so variabel gestaltbar ist, dass Größenunterschiede der einzelnen Segmenteinheiten beschränkt sind.

Erfindungsgemäß dienen dazu ein im Anspruch 1 angegebenes Verfahren zum Erzeugen von Selektorbäumen und eine Analysiereinrichtung zur Analyse von Selektorbäumen mit den Merkmalen des Patentanspruchs 6.

Weitere Ausgestaltungen der Erfindung ergeben sich aus den Unteransprüchen.

Ein wesentlicher Gedanke der Erfindung besteht darin, die bei deren Navigationssystemen eingesetzten Selektorbäume in sukzessiv benötigte Segmenteinheiten aufzuteilen. Insbesondere ist es vorteilhaft, dass bei einer Berücksichtigung unterschiedlicher Zielparameterfelder eine mehrstufige Selektierung und/oder Gliederung durchgeführt werden kann. Eine derartige Prozedur kann prinzipiell beliebig häufig wiederholt werden, gegebenenfalls auch nur hinsichtlich der dichtesten Teile eines Selektorbaums (ASF-Baums).

Somit besteht ein wesentlicher Vorteil des erfindungsgemäßen Verfahrens darin, dass übliche Speicherkapazitäten herkömmlicher Navigationsrechner in Navigationssystemen auch im Hinblick auf eine große Anzahl von Orts- und insbesondere Straßennamen eines dicht besiedelten Landes ausreichend sind.

Das erfindungsgemäße Verfahren zum Erzeugen von Selektorbäumen weist im Wesentlichen die folgenden Schritte auf:

a) Bereitstellen einer Eingabemaskeneinheit;

b) Eingeben von Selektionsparametern in die Eingabemaskeneinheit;

c) Bilden von Selektorbaumeinheiten in Abhängigkeit von den in die Eingabemaskeneinheit eingegebenen Selektionsparameter;

d) Segmentieren der Selektorbaumeinheiten in Segmenteinheiten; und

e) Übertragen der Segmenteinheiten segmentweise in eine Speichereinheit.

Ferner weist die erfindungsgemäße Analyseeinrichtung zur Analyse von Selektorbäumen im Wesentlichen auf:

a) eine Sucheinheit zur rekursiven Tiefensuche in mindestens einem Selektorbaum;

b) eine Bestimmungseinheit zur Bestimmung von akkumulierten Elementgrößen;

c) eine Berechnungseinheit zur Berechnungen von Unterbaumgrößen, einem maximalen Wert von Unterbaumgrößen und einer Summe von Knotengrößen; und

d) eine Speichereinheit zur Abspeicherung der Unterbaumgrößen, des maximalen Werts von Unterbaumgrößen und der Summe von Knotengrößen.

In den Unteransprüchen finden sich vorteilhafte Weiterbildungen und Verbesserungen des jeweiligen Gegenstandes der Erfindung.

Ein wesentlicher Vorteil des erfindungsgemäßen Verfahrens besteht darin, dass variabel dichte Selektorbäume segmentiert bereitgestellt werden können, die bei der manuellen zeichenweisen Eingabe von Selektionsparametern segmentweise entsprechend einem Eingabefortschritt in den Arbeitsspeicher eingelagert werden können.

Weiterhin ist es zweckmäßig, dass ein entsprechender Selektorbaum gemäß einer Tiefensuche rekursiv abgelaufen werden kann und auf einem Pfadrückweg bzw. in einem Nachschritt die von einem unteren Rand her akkumulierten Elementgrößen errechnen kann. Aus diesen errechneten Elementgrößen wird für sämtliche Elemente die Größe ihrer Unterbäume und für sämtliche Schichten die Größe des größten Unterbaums der Schicht sowie die Summe der Knotengrößen der oberhalb und in der Schicht liegenden Knoten errechnet und abgelegt.

Gemäß einer bevorzugten Weiterbildung der vorliegenden Erfindung werden die Selektorbäume durch eine Trennungseinheit in Wurzelsegmenteinheiten und Blattsegmenteinheiten zerlegt. Das heißt, dass die Segmenteinheiten durch Wurzelsegmenteinheiten und Blattsegmenteinheiten innerhalb eines Selektorbaums bereitgestellt werden.

Vorzugsweise wird eine derartige Gliederung in Wurzelsegmenteinheiten in einer horizontalen Weise bereitgestellt. Hierbei bezeichnet Wurzelsegmenteinheiten wurzelnah liegende Segmenteinheiten, während Blattsegmenteinheiten blattnah liegende, gegebenenfalls nebeneinander liegende Segmenteinheiten bezeichnen.

Gemäß noch einer weiteren bevorzugten Weiterbildung der vorliegenden Erfindung liegt eine Größe (Elementgröße) der Wurzelsegmenteinheiten unterhalb eines maximalen Werts von Unterbaumgrößen, derart, dass eine Gesamtspeichertiefe der Speichereinheit unterhalb eines vorbestimmten Grenzwerts liegt.

Insbesondere ist es zweckmäßig, dass eine Größe sämtlicher Segmenteinheiten kleiner als ein voreingestellter Wert ist, so dass ein Gesamtspeicherbedarf begrenzt bleibt.

Gemäß noch einer weiteren bevorzugten Weiterbildung der vorliegenden Erfindung wird der maximale Wert von Unterbaumgrößen in Abhängigkeit von einem Verzweigungsadressraum vorgegeben. In vorteilhafter Weise ergibt sich der voreingestellte Wert in Abhängigkeit einer Kapazität des Verzweigungsadressraums.

Gemäß noch einer weiteren bevorzugten Weiterbildung der vorliegenden Erfindung werden die Selektorbäume mittels eines nicht-segmentierenden Tiefensuchverfahrens vorab strukturiert. Hierdurch ergibt sich der Vorteil, dass derartige Selektorbäume (ASF-Bäume) zur Vermessung zunächst nach einem einfacheren, nicht-segmentierenden Tiefensuchverfahren erzeugt werden können, um anschließend mit segmentierenden Verfahren variabel dicht bereitgestellt zu werden.

Gemäß noch einer weiteren bevorzugten Weiterbildung der vorliegenden Erfindung ist eine Aufteilungseinheit zur Aufteilung der Segmenteinheiten in Wurzelsegmenteinheiten und Blattsegmenteinheiten und zur Bildung einer Trennungseinheit bereitgestellt, derart, dass eine Summe der Größen (Elementgrößen) der Wurzelsegmenteinheiten einschließlich der Trennungseinheit und eine Summe der Größen der Blattsegmenteinheiten jeweils einen vorgegebenen Grenzwert nicht überschreiten. In vorteilhafter Weise wird eine horizontale, gegebenenfalls mäanderförmig verlaufende Trennungseinheit (Trennlinie) zwischen wurzelnahen und blattnahen Segmenteinheiten durch Markierung von Elementen derart gekennzeichnet, dass die Summe der Größen oberhalb und einschließlich der Trennungseinheit (Trennlinie) sowie alle unterhalb der Trennungseinheit (Trennlinie) liegenden Summen der Größen in den jeweiligen blattnahen Unterbäumen den vorgegebenen Wert nicht überschreiten.

Gemäß noch einer weiteren bevorzugten Weiterbildung der vorliegenden Erfindung ist eine Übertragungseinheit zur Übertragung der Wurzelsegmenteinheiten und der Blattsegmenteinheiten in die Speichereinheit vorgesehen, wobei die Wurzelsegmenteinheiten und die zugehörigen Blattsegmenteinheiten speicherdicht in einem zusammenhängenden Adressierungsraum angeordnet sind. In zweckmäßiger Weise wird der gesamte Selektorbaum umgespeichert und umadressiert, derart, dass der wurzelnahe Teil und sämtlichen blattnahen Teile speicherdicht beieinander liegen. Ferner ist es vorteilhaft, dass der wurzelnahe Teil und jeweils ein blattnaher Teil einen zusammenhängenden, dichten Null-Basis-Adressraum bilden, so dass in einem Korrekturfall ein einfaches Zurücksetzen ermöglicht wird.

Gemäß noch einer weiteren bevorzugten Weiterbildung der vorliegenden Erfindung ist eine Indikatoreinheit zur Ausgabe eines Indikatorsignals bereitgestellt, wobei das Indikatorsignal anzeigt, dass eine Summe der Größen (Elementgrößen) der Wurzelsegmenteinheiten einschließlich der Trennungseinheit (Trennungslinie) und/oder eine Summe der Größen der Blattsegmenteinheiten jeweils den vorgegebenen Grenzwert überschritten haben. Insbesondere kann dann, wenn derartige Größenverhältnisse nicht erfüllt werden, eine entsprechende Meldung ausgegeben werden.

ZEICHNUNGEN

Ausführungsbeispiele der Erfindung sind in den Zeichnungen dargestellt und in der nachfolgenden Beschreibung näher erläutert.

In den Zeichnungen zeigen:

Fig. 1      ein prinzipielles Blockbild eines segmentierten Selektorbaums (ASF-Baums);

Fig. 2      ein Prinzipbild einer mäanderförmig ausgebildeten Trennungseinheit zwischen einer Wurzelsegmenteinheit und Blattsegmenteinheiten eines Selektorbaums;

Fig. 3      ein prinzipielles Blockbild einer Analysiereinrichtung zur Analyse von Selektorbäumen gemäß einem bevorzugten Ausführungsbeispiel der vorliegenden Erfindung;

Fig. 4(a)   ein Durchlaufen von einem oberen Selektorbaumteil mit einem aktuellen Pfad;

Fig. 4(b)   ein Durchlaufen von Selektorbaumteilen in einem oberen Teil und einem unteren Teil;

Fig. 5      ein Ablaufdiagramm eines Beispiels einer Verschiebung der Trennungseinheit gemäß einem bevorzugten Ausführungsbeispiel der vorliegenden Erfindung;

Fig. 6(a)   eine Ergebnisdarstellung einer Trennungseinheit in einem erfindungsgemäßen Ausführungsbeispiel; und

Fig. 6(b)   eine Speicherung, in einer Ergebnisdarstellung, gemäß einem bevorzugten Ausführungsbeispiel der vorliegenden Erfindung.

In den Figuren bezeichnen gleiche Bezugszeichen gleiche oder funktionsgleiche Komponenten oder Schritte.

BESCHREIBUNG DER AUSFÜHRUNGSBEISPIELE

Es sei darauf hingewiesen, dass der im Folgenden verwendete Ausdruck "Einheit" auf Hardware-Einheiten und/oder Computerprogrammprodukt-Softwareeinheiten bezogen werden kann.

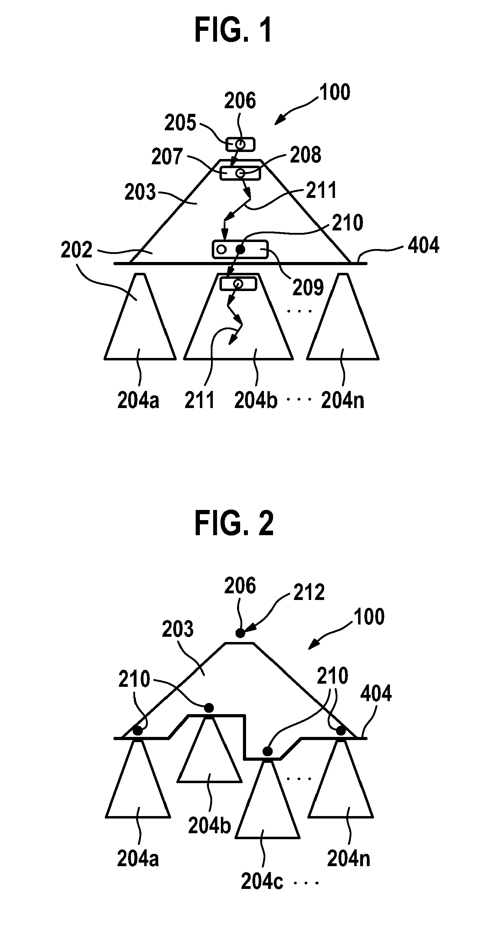

Fig. 1 zeigt die Grundstruktur eines Selektorbaums bzw. ASF-Baums (multiären blattorientierten Selektorbaums mit Alphabetzeichen als Selektoren). Wie in Fig. 1 gezeigt, weist der Selektorbaum Selektorbaumeinheiten 202 auf, welche durch eine Trennungseinheit 404 getrennt sind. Die Selektorbaumeinheiten 202 bestehen in dem in Fig. 1 gezeigten Beispiel aus Wurzelsegmenteinheiten 203 und Blattsegmenteinheiten 204a-204n. In einem Wurzelknoten 207 enthält der Selektorbaum 100 sämtliche Anfangszeichen von Namen einer Namensmenge. Mit den ersten eingegebenen Zeichen wird ein Weg zu einem Nachfolgeknoten ausgewählt. Statistisch gesehen kann in einem derartigen ersten Schritt jedwedes Zeichen auftreten, so dass mit einer vergleichbaren Wahrscheinlichkeit - abgesehen von Unterschieden in einer Auftretenshäufigkeit der Zeichen - einer von Nachfolgepfaden 211 beschritten wird.

Aus diesem Grund ist es zweckmäßig, zu Beginn einer Eingabe den wurzelnahen Teil eines Selektorbaums bzw. das Wurzelsegment 203 bereitzustellen.

Nach wenigen Zeichen ergibt sich ein bestimmter Pfad 211, so dass die Gesamtbreite des Baums nicht mehr benötigt wird bzw. nicht mehr abgesucht werden muss. Zu einem bestimmten Zeitpunkt während der Eingabe gelangt der Pfad auf einem bestimmten Zeichen an den unteren Rand einer derartigen Wurzelsegmenteinheit 203 derart, dass zur Fortsetzung des Pfads 211 eine der Blattsegmenteinheiten 204a-204n benötigt wird. Nur diese Blattsegmenteinheit, die in dem in Fig. 1 gezeigten Ausführungsbeispiel mit dem Bezugszeichen 204b bezeichnet ist, wird für die Fortsetzung des Pfads 211 benötigt. Der Übergang über die Trennungseinheit 404 von der Wurzelsegmenteinheit 203 zu der Blattsegmenteinheit 204b erfolgt in einem Übergangsknoten, welcher ein Übergangselement 210 enthält.

Durch eine rekursive Struktur eines derartigen Selektorbaums 100 ist die Fortsetzung von einem derartigen Übergangselement 210 identisch zu einem Einstieg von einem Einzelzeichen vor der Baumwurzel. Tatsächlich ist ein derartiges Pseudoelement als ein Ankerelement 206 in einem Ankerknoten 205 des Baums vorhanden. Von einem derartigen Ankerelement 206 verläuft der aktuelle Pfad 211 zu einem Wurzelknoten 207, welcher ein Zeichenelement 208 enthält. Ein Vorteil des erfindungsgemäßen Erzeugungsverfahrens von Selektorbäumen liegt darin, dass bei einer Berücksichtigung weiterer Aspekte, wie beispielsweise weiterer Zielparameter, eine derartige zweistufige Gliederung erweitert werden kann, derart, dass eine mehrstufige Gliederung bereitgestellt wird und eine oben beschriebene Vorgehensweise beliebig häufig wiederholbar ist. Insbesondere ist es vorteilhaft, derartige Wiederholungen nur in den dichtesten Teilen eines Selektorbaums 100 durchzuführen.

Zu Beginn einer Eingabe bzw. eines Selektorbaumeinstiegs 212 wird ein Wurzelsegment eingelagert, wobei es mit einem Präfix den Pfad 211 bis zu einem Übergangselement beschreitet. Um einen derartigen Übergang zu erfassen, muss die Trennungslinie (Übergangslinie, Trennungseinheit) 404 durch eine geeignete Markierung vorausgehender Elemente eingeprägt sein. Im Allgemeinen sind nicht alle Elemente eines Knotens Übergangselemente 210 (siehe untenstehend Fig. 2). Wird ein derartiges Übergangselement 210 erreicht, dann wird die angesteuerte Blattsegmenteinheit 204a-204n zusätzlich angelagert. Somit wird ein aktueller Pfad 210 von dem Ankerknoten 205 über die Wurzelsegmenteinheit 203 zu einer entsprechenden Blattsegmenteinheit 204b bereitgestellt. Bei Fehleingaben bzw. Irrtümern ist es somit auf einfache Weise möglich, eine Rücksetzung einer aktuellen Eingabe bis hin zu dem Ankerknoten 205 vorzunehmen.

Es sie hier darauf hingewiesen, dass die in Fig. 1 gezeigte Prinzipstruktur mit einer horizontalen Übergangslinie, d.h. einem horizontalen Übergang von Wurzelsegmenteinheit zu Blattsegmenteinheit eine die alisierte Situation darstellt. Eine derartige horizontale Übergangslinie bzw. Trennungseinheit 404 würde für einen völlig homogenen Selektorbaum 100 zutreffen, bei dem sämtliche Teile die gleiche Größe besitzen. Dies ist bei einem realen Selektorbaum in nachteiliger Weise nicht der Fall.

Fig. 2 veranschaulicht eine in der Höhe schwankend verlaufende Trennungseinheit (Übergangslinie) 404. Hinsichtlich einer bauminternen Adressierung kann eine Gleichheitsforderung durch eine Forderung nach Nichtüberschreitung einer bestimmten, durch den möglichen Adressraum vorgegebenen Größe ersetzt werden, um für genau diese Adressen einen Rechenaufwand einzuschränken. Somit ist es bei einem Aufbau eines derartigen Selektorbaums 100, wie er in Fig. 2 veranschaulicht ist, erforderlich, eine Trennungseinheit 404 so einzustellen, dass sowohl die Wurzelsegmenteinheit 203 als auch sämtliche Blattsegmenteinheiten 204a-204n eine vorgegebene Größe S nicht überschreiten.

In Fig. 2 sind mehrere Übergangselemente 210 dargestellt, wobei jedes Übergangselement 210 einen Übergang von einer Wurzelsegmenteinheit 203 zu einer entsprechenden Blattsegmenteinheit 204a-204n bereitstellt. Um eine wie in Fig. 2 dargestellte Übergangslinie (Trennungseinheit) 404 einzustellen, ist es notwendig, den betreffenden Selektorbaum 100 zu analysieren, d.h. es ist erforderlich, die Größe der einzelnen Teile zu bestimmen, maximal auszusondern, die Übergangslinie zu verschieben, etc. Zu diesem Zweck müssen die einzelnen Teil einzeln oder im Verbund abgelaufen werden, eventuell müssen nur Teile einer Wurzelsegmenteinheit 203 und einer entsprechenden Blattsegmenteinheit 204a-204n abgelaufen werden. Eine Grundoperation dafür ist das sogenannte strukturgesteuerte Ablaufen des Selektorbaums 100, das üblicherweise auch als ein Durchwandern bezeichnet wird. Ein derartiges Ablaufen beginnt immer an der Wurzel, d.h. an dem Selektorbaumeinstieg 212 des Ankerelements 206. Das strukturgesteuerte Ablaufen setzt sich vermöge einer Reihenfolgestrategie rekursiv in die Unterbäume fort, so lange derartige bereitgestellt sind.

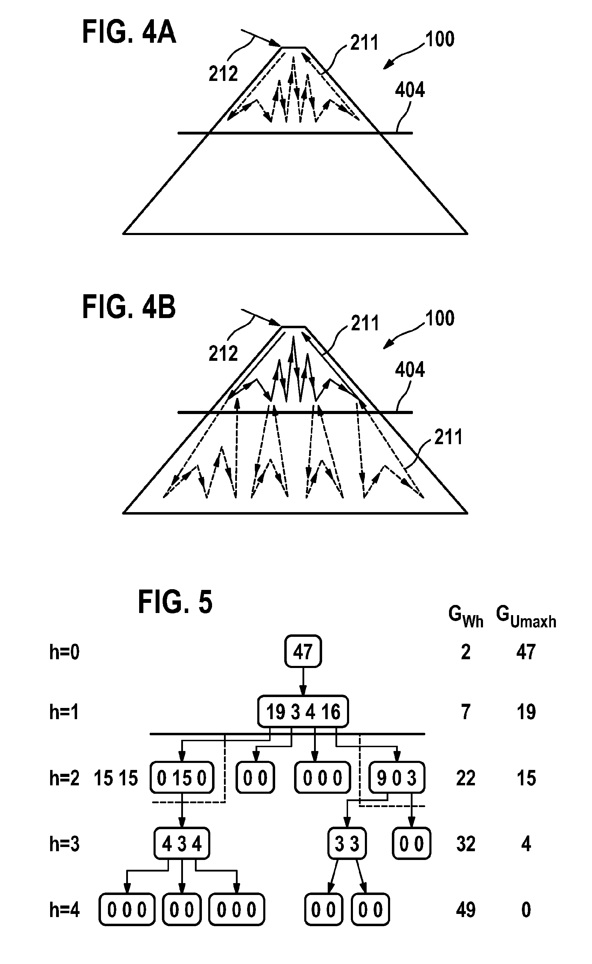

Fig. 4 zeigt ein derartiges rekursives Ablaufen des Selektorbaums 100, wobei Fig. 4(a) ein Ablaufen nur in einem oberen Teil des Selektorbaums veranschaulicht, während Fig. 4(b) ein Ablaufen des Selektorbaums im oberen und unteren Teil veranschaulicht. Wie in Fig. 4(a), (b) veranschaulicht, kann die Trennungseinheit 404 (Überganslinie) als Begrenzung eines rekursiven Abstiegs in ähnlicher Weise wie der untere Rand beim Ablaufen des gesamten Selektorbaums herangezogen werden. Soll nur der untere Teil des Selektorbaums 100 mit dem Pfad 211 abgelaufen werden, dann muss dieser Pfad über den oberen Teil des Selektorbaums angelaufen werden, wobei wegen der Trennung der Blattsegmenteinheiten immer wieder zu dem oberen Teil zurückgekehrt und dort horizontal versetzt werden muss. Dies stellt eine strukturbedingte Modifikation eines einfachen Ablaufens beispielsweise einer linearen Abfolge dar. So kann beispielsweise der Aufruf eines unteren Unterbaums aufgefasst werden als ein Aufruf einer Wurzelsegmenteinheit.

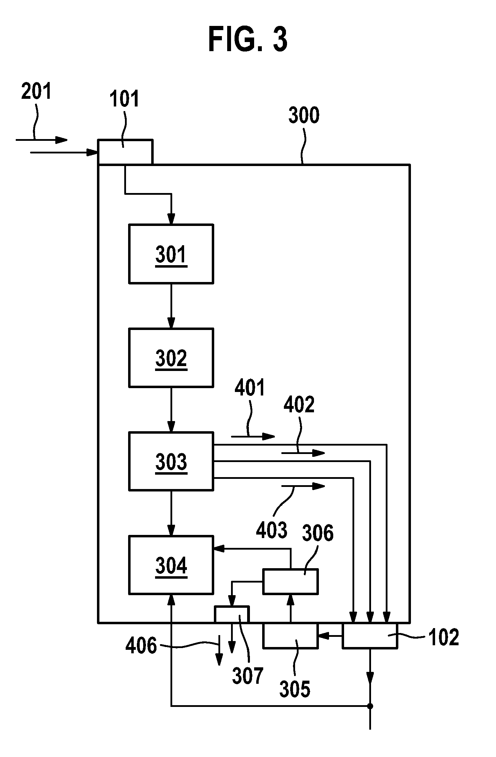

Fig. 3 veranschaulicht ein Blockbild einer erfindungsgemäßen Analysiereinrichtung 300. Selektionsparameter 201 werden über eine Eingabemaskeneinheit 101 in die Analysiereinrichtung 300 eingegeben und einer in dieser enthaltenen Sucheinheit 301 zugeführt. Die Sucheinheit 301 dient einer rekursiven Tiefensuche in mindestens einem Selektorbaum 100. Das Ergebnis der Suche wird einer Bestimmungseinheit 302 zur Bestimmung von akkumulierten Elementgrößen 401, 402, 403 zugeführt. Anschließend erfolgt in einer Berechnungseinheit 303 eine Berechnung von Unterbaumgrößen 401, einem maximalen Wert 402 von Unterbaumgrößen 401 und einer Summe von Knotengrößen 403. Diese Elementgrößen 401, 402 und 403 werden zu einer Ausgabeeinheit 102 der Analysiereinrichtung 300 ausgegeben. Ferner können die entsprechenden Elementgrößen in einer in der Analysiereinrichtung 300 bereitgestellten Speichereinheit 304 abgespeichert werden. Weiterhin weist die Analysiereinrichtung 300 eine Übertragungseinheit 306 zur Übertragung eines Ausgangssignals aus der Ausgabeeinheit zu einer Aufteilungseinheit 305 auf.

Die Aufteilungseinheit 305 dient einer Aufteilung der Segmenteinheit 203, 204a-204n in Wurzelsegmenteinheiten 203 und Blattsegmenteinheiten 204a-204n und zur Bildung der Trennungseinheit 404 derart, dass eine Summe der Größen S der Wurzelsegmenteinheiten 203 einschließlich der Trennungseinheit 404 und eine Summe S der Größen der Blattsegmenteinheiten 204a-204n jeweils einen vorgegebenen Grenzwert 405 nicht überschreiten.

Die Übertragungseinheit 306 überträgt die Wurzelsegmenteinheit 203 und die Blattsegmenteinheiten 204a-204n in die Speichereinheit 304. Ferner ist eine Indikatoreinheit 307 in der Analysiereinrichtung 300 bereitgestellt, um ein Indikatorsignal 406 auszugeben, wobei das Indikatorsignal 406 anzeigt, dass eine Summe der Größen S der Wurzelsegmenteinheiten 203 einschließlich der Trennungslinie 404 und/oder eine Summe S der Größen der Blattsegmenteinheiten 204a-204n jeweils den vorgegebenen Grenzwert 405 überschritten haben.

Im Folgenden wird die Einstellung der Trennungseinheit 404 bzw. der Übergangslinie beschrieben werden. Für eine derartige Einstellung sind unterschiedliche Einzelschritte erforderlich, die im Folgenden in der Reihenfolge ihres Auftretens erläutert sind:

Erzeugung eines Selektorbaums 100

Da der Selektorbaum 100 nicht in seiner endgültigen Form vorhanden ist, kann er mit einem einfachen rekursiven Verfahren gemäß einer tiefen Konstruktion erstellt werden.

Feststellung von Teile- bzw. Elementgrößen

Zur Vorbereitung für eine tatsächliche Aufteilung in Segmenteinheiten 202 muss eine Größe S einzelner Teile einzelner Teile ermittelt werden. Neben einer Gesamtgröße $G_{Baum}$ sind dies:

$G_{Ue}$ eine Größe eines Unterbaums für sämtliche Elemente e des Selektorbaums 100;

$G_{Usumh}$ die Größen unterhalb einer Schicht h für sämtliche Schichten h eines Selektorbaums 100; und

$G_{Umaxh}$ ein größtes Einzelgewicht $G_{Ue}$ einer Schicht h.

Aus derartigen Einzelwerten lässt sich eine Größe $G_{Wh}$ von Summen der Schichten oberhalb und einschließlich einer Schicht h berechnen zu:

$$G_{Wh} = G_{Baum} - G_{Uusmh}$$

Die Größen $G_{ue}$ sind die Größen möglicher Blattsegmenteinheiten 204a-204n, die Größen $G_{Wh}$ sind die Größen möglicher reiner Wurzelsegmenteinheiten 203. Neben $G_{Umaxh}$ kann es auf einer Ebene weitere $G_{Ue} > S$ geben. $G_{Umaxh}$ dient lediglich einer Anzeige, wo die Trennungslinie bzw. Übertragungslinie (Trennungseinheit) 404 nicht liegen kann.

Die oben genannten Werte können durch ein Ablaufen des Selektorbaums 100 auf einem gemäß Fig. 4 dargestellten aktuellen Pfad 211 ermittelt werden. Der Pfad 211 folgt dem Baum bis zu den Blattsegmenteinheiten 204a-204n, wobei deren Größe bestimmt wird.

Es sei darauf hingewiesen, dass sich der Ausdruck "Größe" im Folgenden auf eine Größe gemessen in Datenstrukturelementen bezieht. Nach einer Bestimmung der Größe wird diese als ein $G_{Ue}$ an das Vorgängerelement zurückgegeben. Dort werden die Größen sämtlicher Knotenelemente aufaddiert, wobei der Eigenaufwand des Knotens hinzugefügt und wieder als $G_{Ue}$ an die aufrufende Einheit zurückgegeben wird. Gleichzeitig werden die beiden Schichtengrößen $G_{Usumh}$, $G_{U\text{-}maxh}$ fortgeschrieben. Am Ende eines derartigen Ablaufens können die $G_{Wh}$ berechnet werden. Die $G_{Ue}$ werden pro Element festgelegt, während die übrigen Werte pro Schicht festgehalten werden.

Die Schichten sind von der Baumwurzel her steigend mit h = 1, 2, ... durchnummeriert. In der Regel ist dem Selektorbaum 100 ein Ankerelement 206 vorgeschaltet. Dieses Ankerelement weist die Schichtnummer h = 0 auf. Zur Vereinheitlichung besteht dieses Ankerelement 206 (siehe Fig. 2) aus einem Knoten mit einem einzigen (Pseudo-) Element. Mit einem steigenden h nehmen die gerade berechneten Werte $G_{Wh}$ zu, am Ankerelement 206 mit $G_{W0} = 2$ beginnend, während die Werte $G_{Umaxh}$ ab einem Startwert $G_{Umax0} = G_{Baum}\text{-}2$ abnehmen.

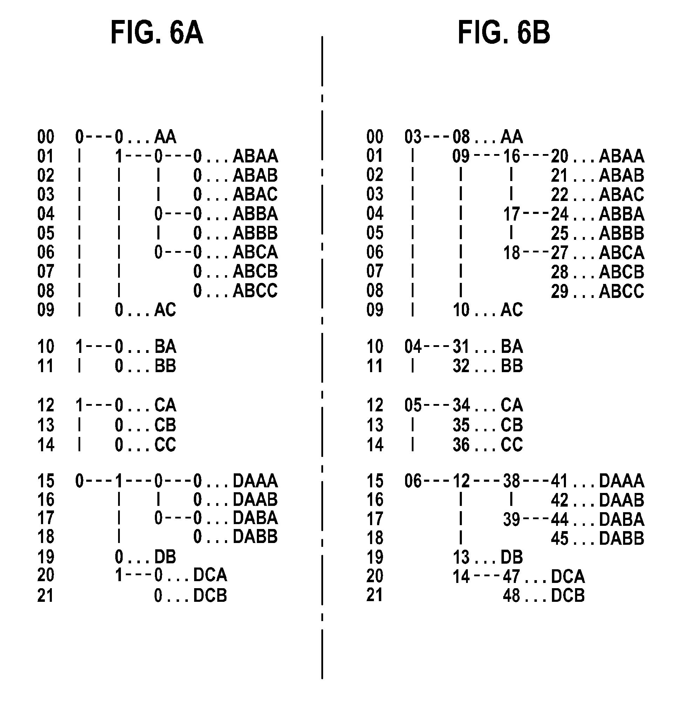

Im Folgenden wird die Auswertung mit den so erzielten Werten anhand der Fig. 5, 6(a) und 6(b) beschrieben werden.

Mit den erhaltenen Werten muss nun festgestellt werden, ob eine Segmentierung in einem gewünschten Rahmen ermöglicht werden kann oder ob gegebenenfalls Korrekturen erforderlich sind. Der gewünschte Rahmen ist durch eine maximale Segmentgröße S vorgegeben. Sie ergibt sich z.B. aus der Kapazität von Speichereinheiten der in der erfindungsgemäßen Analysiereinrichtung 300 bereitgestellten Speichereinheit 304. Somit ist es erforderlich, zu prüfen, ob eine oder mehrere Schichten h vorhanden sind, die die folgende Gleichung (11) erfüllen:

$$G_{Wh} \leq S \text{ und } G_{Umaxh} \leq S \qquad\qquad (1)$$

Ist die Gleichung (1) für beide Ungleichungen erfüllt, ergibt sich eine ideal horizontale Übergangslinie. Man kann eine Schicht gegebenenfalls nach flankierenden Kriterien auswählen, etwa der Anzahl einzugebender Zeichen vor einem Übergang, gegebenenfalls ohne Übergang, wenn vorher eine Eindeutigkeit erreicht worden ist.

Kann dies nicht bereitgestellt werden, so kann die Schicht mit dem kleinsten Ausdruck

$$|G_{Wh} - G_{Umaxh}| \qquad\qquad (a)$$

ausgewählt werden. Damit wird eine ausgewogene Größe von Wurzelsegmenteinheit 203 und größter Blattsegmenteinheit 204a-204n und damit der geringste Speicheraufwand erreicht.

Falls eine derartig günstige Situation nicht gegeben ist, muss versucht werden, durch abschnittsweises Verschieben der Übergangslinie eine Lösung herbeizuführen. Man kann dies grundsätzlich durch eine weitere Aufteilung von Unterbäumen (Verschiebung nach unten) oder durch ein Zusammenfassen von Unterbäumen (Verschiebung nach oben) erreichen. Ist S kleiner als die Gesamtgröße des Selektorbaums 100, dann sind bei kleinerem h in der Folge der Paare

$$<G_{Wh}, G_{Umaxh}>$$

eine oder mehrere benachbarte Schichten vorhanden, die der folgenden Gleichung (2) genügen

$$G_{Wh} < S \text{ und } G_{Umaxh} > S \qquad\qquad (2)$$

für ein größeres h können eine oder mehrere benachbarte Schichten bereitgestellt werden, die der folgenden Beziehung (3) genügen:

$$G_{Wh} > S \text{ und } G_{Umaxh} < S \qquad\qquad (3)$$

Wenn eine Lösung mit nur einer Übergangslinie (Trennungslinie), Trennungseinheit 404 vorhanden ist, dann muss diese zwischen diesen beiden Stellen, die durch die Gleichung (3) gegeben sind, liegen. Durch ein abschnittsweises Verschieben in der baumabwärts oder baumaufwärts weisenden Richtung kann diese Trennungslinie 404 bereitgestellt werden. Eine Verschiebung baumabwärts ist wirksamer, da ein Knoten in mehrere Unterbäume aufgeteilt werden kann, wodurch ein zu großer Blattsegmentwert $G_{Umaxh}$ schneller modifizierbar und damit einstellbar ist. Übergangsstellen liegen üblicherweise eher im oberen Bereich des Selektorbaums 100.

Bei einer Verschiebung wird man mit einem größten $h_ü$ beginnen, für welches die oben angegebene Gleichung (2) erfüllt ist. Ein Knoten kann mehrere Elemente zu einem großen Unterbaum erhalten, wobei bei sämtliche eine Blattsegmenteinheit 204a-204n bereitgestellt wird.

Bei einer derartigen Verschiebung baumabwärts muss die in einem gewünschten Bereich liegende Gegengröße $G_{Whü}$ fortgeschrieben und dahingehend beobachtet werden, ob sie ihren Grenzwert überschreitet. Falls dies der Fall ist, ist keine Lösung möglich. Dann wird entweder eine Kapazität S der Speichereinheit 304 zu vergrößern sein, oder es werden mehrere Übergänge bereitgestellt.

Eine Verschiebung wird während eines erneuten Ablaufens auf einem Pfad 211 des Selektorbaums 100 durchgeführt. Beginnend mit einer gewählten Schicht $h_ü$ und einem zugeordneten Wert $G_W = G_{Whü}$ wird ein Element markiert, wenn im Zuge eines rekursiven Abstiegs erstmalig die Gleichung:

$$G_{Ue} \leq S \tag{c}$$

erfüllt ist. Bei einem Überlaufen des Knotens wird das mitgeführte $G_{Whü}$ als $G_{Whü} = G_{Whü} + G_K$ mit $G_K$ der Größe des Knotens fortgeschrieben. Überschreitet $G_{Whü}$ den Grenzwert S, dann muss eine Nichterfüllungsanzeige bereitgestellt werden. Mit diesem Ablaufen werden von der Ebene $h_ü$ aus sämtliche zu großen Blattsegmenteinheiten 204a-204n erfasst. Daraufhin wird die Markierung, d.h. die Übergangslinie bzw. Trennungseinheit 404 abschnittsweise in tiefere Schichten verlagert, wie dies beispielsweise bei einer Blattsegmenteinheit 204c in Fig. 2 veranschaulicht ist.

Wird die obige Gleichung (2) geringfügig modifiziert, so erhält man:

$$G_{Wh} < S \text{ und } G_{Umaxh} \geq S \tag{4}$$

wobei die Bedingungen bei Ablaufen des Selektorbaums 100 entsprechend angepasst werden, so dass eine Markierung der horizontalen Trennungseinheit 404 (Übergangslinie) automatisch mit erfüllt wird.

Im Folgenden wird die Umspeicherung eines Selektorbaums 100 anhand eines bevorzugten Ausführungsbeispiels der vorliegenden Erfindung erläutert werden.

Durch die oben beschriebenen Prozeduren ist nunmehr bekannt, wie die Teile eines Selektorbaums für einen Betrieb zusammengehören sollen, so dass die Selektorbaumeinheiten zusammenhängend in die in der Analysiereinrichtung 300 bereitgestellten Speichereinheiten 304 übertragen werden können. Der Selektorbaum 101 muss daher abschließend transponiert bzw. in eine andere Speicherlage gebracht werden. Zu diesem Zweck wird er erneut abgelaufen und dabei umgespeichert, wie dies unter Bezugnahme auf den in Fig. 4 dargestellten Pfad 211 veranschaulicht ist. Zunächst wird nur der obere Teil bis einschließlich zu dem Knoten den Übergangselementen an den Anfang eines Zielbehälters gebracht. Anschließend wird der Selektorbaum 100 erneut von der Wurzel her abgelaufen, wobei der Teil bis zu der Trennungseinheit 404 jedoch überlaufen wird. Die Blattsegmenteinheiten 204a-204n werden nacheinander umgespeichert.

Da die Zeichenelemente mit ihren Nachfolgerknoten verkettet und die Verkettungszeiger als Adressen innerhalb der Datenfolge realisiert sind, müssen die Werte beim Umordnen korrigiert werden. Um dies durchzuführen, werden Quell- und Ziel-Selektorbaum mit der Zeichenstrategie abgelaufen. Da man beim Ablaufen immer von einem Zeichenelement seinen Nachfolger aufruft, hat man mit dem Aufrufer und dem Aufgerufenen gerade die beiden Speicherzellen, die beispielsweise bei einer Doppelverkettung korrigiert werden müssen. Man kann demnach wie beim ursprünglichen Erzeugen der beiden Lageadressen dann der jeweiligen Gegenstelle (A bei B und B bei A) jetzt ab dem Zielkontext ablegen.

Im Folgenden wird ein Beispiel eines Verschiebens der Trennungseinheit 404 (Übergangslinie) gemäß der vorliegenden Erfindung unter Bezugnahme auf die Fig. 5 und 6 beschrieben werden. Die Zeichen selbst spielen im Selektorbaum 100, ASF, keine Rolle. Daher sind die Plätze zur Vereinfachung für die Größe $G_{Uh}$ bereitgestellt. Es ist angenommen, dass für ein Zeichenelement je eine Dateneinheit und für den Knoten selbst ebenfalls eine Dateneinheit benötigt wird. Die Vorgabe für die Segmenteinheiten sei S = 15 Einheiten. Der Gesamtaufwand für den Baum beträgt dann somit 49 Einheiten. Am Rand sind lediglich die letztlich entscheidenden ebenen-spezifischen Rechengrößen aus der Analyse aufgelistet, wie in den beiden rechten Spalten in der Fig. 5 veranschaulicht. Es ist erkennbar, dass für keine der drei mittleren Ebenen die Voraussetzung für eine horizontale Übergangslinie gegeben ist, da beide keinen Wert ≤ 15 aufweisen. Es muss demnach eine Verschiebung der Trennungseinheit 404 bereitgestellt werden. Die Startebene liegt bei $h_ü = 1$, wobei durch [7,19] die oben angegebene Gleichung (2) erfüllt ist. Zwei Segmente sind mit $G_{Umaxh} = 19$

bzw. $G_{Umaxh}$ = 16 Einheiten zu groß. Dort wird die Linie dementsprechend um je einen Knoten nach unten verlegt (gestrichelt eingezeichnet). Jetzt ist mit 15 bzw. 9 Einheiten die Randbedingung erfüllt. Die Größe des Wurzelsegments ist dabei um 2 bzw. 4 Einheiten durch die beiden Knoten mit je 3 Elementen bzw. 4 Einheiten gewachsen, erfüllt also mit $G_W$ = 15 Einheiten ebenfalls die Randbedingung. Die Lösung ist mit dem Wertpaar [15,15] gegeben.

Die Fig. 6(a) und 6(b) zeigen ein mit einem Computerprogrammprodukt erstelltes Ergebnis in einer Computerausgabe. An den Pfaden sind statt Zeichen Übergangsmarken angegeben. Ankerknoten 205 und Ankerelemente 206 sind in der Fig. 6(a) und 6(b) aus Gründen der Übersichtlichkeit weggelassen. In den Fig. 6(a) und 6(b) sind an den Pfaden die Speicherungsreihenfolgen angegeben. Hierbei betreffen die Speicheradressen 0 und 1 das Ankerelement 206, während die Adressen 2, 7, 11, 15, 19, 23, 26, 30, 33, 37, 40, 43 und 46 mit den Daten für den Knoten als solche belegt und in dem Ausdruck nicht sichtbar sind. Wesentlich sind hierbei die dichten Wertefolgen in den Segmenteinheiten. die Namen sind hierbei willkürlich gewählt, wobei diese einer alphabetischen Reihenfolge entsprechen. Die Indizes sind in der jeweils ersten Spalte Zeilennummern, die mit einer Nummerierung von Namen übereinstimmen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

**Patentansprüche**

1. Verfahren zum Erzeugen von Selektorbäumen (100, ASF), mit den folgenden Schritten:

    a) Bereitstellen einer Eingabemaskeneinheit (101);
    b) Eingeben von Selektionsparametern (201) in die Eingabemaskeneinheit (101);
    c) Bilden von Selektorbaumeinheiten (202) in Abhängigkeit von den in die Eingabemaskeneinheit (101) eingegebenen Selektionsparametern (201);
    d) Segmentieren der Selektorbaumeinheiten (202) in Segmenteinheiten (203, 204a-204n); und
    e) Übertragen der Segmenteinheiten (203, 204a-204n) segmentweise in eine Speichereinheit (304).

2. Verfahren nach Anspruch 1,
    **dadurch gekennzeichnet,**
    **dass** die Selektorbäume (100, ASF) durch eine Trennungseinheit (404) in Wurzelsegmenteinheiten (203) und Blattsegmenteinheiten (204, 204a-204n) zerlegt werden.

3. Verfahren nach Anspruch 2,
    **dadurch gekennzeichnet,**
    **dass** eine Größe (S) der Wurzelsegmenteinheiten (203) einen maximalen Wert (402) von Unterbaumgrößen unterschreitet, derart, dass eine Gesamtspeichertiefe der Speichereinheit (304) unterhalb eines vorbestimmten Grenzwerts liegt.

4. Verfahren nach Anspruch 3,
    **dadurch gekennzeichnet,**
    **dass** der maximalen Wert (402) von Unterbaumgrößen in Abhängigkeit von einem Verzweigungsadressraum vorgegeben wird.

5. Verfahren nach einem der Ansprüche 1 bis 4,
    **dadurch gekennzeichnet,**
    **dass** die Selektorbäume (100, ASF) mittels eines nicht-segmentierenden Tiefensuchverfahrens vorab strukturiert werden.

6. Analysiereinrichtung (300) zur Analyse von Selektorbäumen (100, ASF), mit:

    a) einer Sucheinheit (301) zur rekursiven Tiefensuche in mindestens einem Selektorbaum (100, ASF);
    b) einer Bestimmungseinheit (302) zur Bestimmung von akkumulierten Elementgrößen (401, 402, 403);
    c) einer Berechnungseinheit (303) zur Berechnung von Unterbaumgrößen (401), einem maximalen Wert (402) von Unterbaumgrößen (401) und einer Summe von Knotengrößen (403); und
    d) einer Speichereinheit (304) zur Abspeicherung der Unterbaumgrößen (401), des maximalen Werts (402) von Unterbaumgrößen (401) und der Summe von Knotengrößen (403).

**7.** Analysiereinrichtung (300) nach Anspruch 6,
**dadurch gekennzeichnet,**
**dass** eine Aufteilungseinheit (305) zur Aufteilung der Segmenteinheiten (203, 204a-204n) in Wurzelsegmenteinheiten (203) und Blattsegmenteinheiten (204a-204n) und zur Bildung einer Trennungseinheit (404) bereitgestellt ist, derart, dass eine Summe der Größen (S) der Wurzelsegmenteinheiten (203) einschließlich der Trennungseinheit (404) und eine Summe der Größen (S) der Blattsegmenteinheiten (204a-204n) jeweils einen vorgegebenen Grenzwert (405) nicht überschreiten.

**8.** Analysiereinrichtung (300) nach Anspruch 7,
**dadurch gekennzeichnet,**
**dass** eine Übertragungseinheit (306) zur Übertragung der Wurzelsegmenteinheiten (203) und der Blattsegmenteinheiten (204a-204n) in die Speichereinheit (304) bereitgestellt ist, wobei die Wurzelsegmenteinheiten (203) und die zugehörigen Blattsegmenteinheiten (204a-204n) speicherdicht in einem zusammenhängenden Adressierungsraum angeordnet sind.

**9.** Analysiereinrichtung (300) nach Anspruch 7 oder 8,
**dadurch gekennzeichnet,**
**dass** eine Indikatoreinheit (306) zur Ausgabe eines Indikatorsignals (406) bereitgestellt ist, wobei das Indikatorsignal (406) anzeigt, dass eine Summe der Größen (S) der Wurzelsegmenteinheiten (203) einschließlich der Trennungseinheit (404) und/oder eine Summe der Größen (S) der Blattsegmenteinheiten (204a-204n) jeweils den vorgegebenen Grenzwert (405) überschritten haben.

# FIG. 1

# FIG. 2

# FIG. 3

# FIG. 4A

# FIG. 4B

# FIG. 5

|  |  | $G_{Wh}$ | $G_{Umaxh}$ |
|---|---|---|---|
| h=0 | 47 | 2 | 47 |
| h=1 | 19 3 4 16 | 7 | 19 |
| h=2 | 15 15 | 0 15 0 | 0 0 | 0 0 0 | 9 0 3 | 22 | 15 |
| h=3 | 4 3 4 | 3 3 | 0 0 | 32 | 4 |
| h=4 | 0 0 0 | 0 0 | 0 0 0 | 0 0 | 0 0 | 49 | 0 |

## FIG. 6A

```
00   0---0...AA
01   |     1---0---0...ABAA
02   |     |   |     0...ABAB
03   |     |   |     0...ABAC
04   |     |   0---0...ABBA
05   |     |   |     0...ABBB
06   |     |   0---0...ABCA
07   |     |         0...ABCB
08   |     |         0...ABCC
09   |   0...AC

10   1---0...BA
11   |   0...BB

12   1---0...CA
13   |   0...CB
14   |   0...CC

15   0---1---0---0...DAAA
16       |   |     0...DAAB
17       |   0---0...DABA
18       |         0...DABB
19       0...DB
20       1---0...DCA
21           0...DCB
```

## FIG. 6B

```
00   03---08...AA
01   |     09---16---20...ABAA
02   |     |     |     21...ABAB
03   |     |     |     22...ABAC
04   |     |     17---24...ABBA
05   |     |     |     25...ABBB
06   |     |     18---27...ABCA
07   |     |           28...ABCB
08   |     |           29...ABCC
09   |   10...AC

10   04---31...BA
11   |   32...BB

12   05---34...CA
13   |   35...CB
14   |   36...CC

15   06---12---38---41...DAAA
16       |   |     42...DAAB
17       |   39---44...DABA
18       |         45...DABB
19       13...DB
20       14---47...DCA
21           48...DCB
```